# EUROPEAN PATENT SPECIFICATION

(11) **EP 0 512 943 B1**
(45) Date of publication and mention of the grant of the patent: **09.08.1995**
(21) Application number: 92630051.8
(22) Date of filing: 07.05.1992
(51) Int. Cl.: B01D 5/00, B01D 53/00

(54) **Recovery of condensable organic compounds from inert streams laden therewith**
Rückgewinnung von kondensierbaren organischen Verbindungen aus Gasströmen
Récupération des composés organiques condensables des courants gazeux

(30) Priority: 10.05.1991 US 698300; 22.10.1991 US 780926
(43) Date of publication of application: 11.11.1992
(73) Proprietor: Kovach, Julius Louis, Worthington Ohio 43235 (US)
(72) Inventor: Kovach, Julius Louis, Worthington Ohio 43235 (US)
(74) Representative: Schmitz, Jean-Marie

(56) References cited:
- GB-A- 2 085 310
- US-A- 4 480 393

## Description

The present invention concerns a cyclic process for recovering a condensable organic compound from an inert gas stream laden therewith.

The widespread use of solvents in industrial applications has resulted in increased emissions of volatile organic compounds (VOCs) into the atmosphere, giving rise to environmental concerns and prompting stricter legislative controls on such emissions. As a consequence, manufacturers of pharmaceuticals, coated products, textiles, and polymer composites and foams, as well as hydrocarbon producers and distributors, face a dilemma in removing VOCs from process gas streams in that, owing to rising energy prices, recovery costs are very often higher than the value of the VOCs recovered, even considering rising solvent prices. This dilemma has led to inquiries into more profitable methods of recovering condensable organic vapors from process gas streams.

The US-A-4 480 393 discloses a vapor recovery system in a cyclic process comprising a heat exchange of the laden stream with a regenerated gas stream, the separation of the solvent passing the gas through an expander, separating the solvent in a separator, passing the gas in a heat exchanger, passing the gas through a blower and contacting the regenerated gas with organic compounds.

The GB-A-2 085 310 discloses a process for the recovery of solvents wherein a carrier gas stream laden with solvent vapours in an evaporation space is compressed by a compressor, cooled by a heat exchanger and expanded by a turbine with the production of work to condense solvent vapours and separate the solvent. The carrier gas stream is returned in the evaporation space.

Another method is disclosed in US-A-4 480 393. By first concentrating the condensable vapors contained in a process gas stream carrier and then employing refrigeration condensation to effect their recovery, the method operates more energy efficiently than those methods previously known. Particularly, this method entails first passing a process gas stream carrying a condensable organic compound such as a solvent through, for example, a packed carbon bed which adsorbs the solvent vapor such that solvent is accumulated in the bed and a solvent-free process gas stream may be exhausted or recycled back to the process.

Upon becoming saturated with adsorbed solvent, the bed is regenerated by the circulation therethrough of a heated inert gas stream (though for some solvents air can be used) to vaporise the solvent. Once vaporized, the solvent is carried by the inert gas stream from the bed to a refrigeration/condensation recovery system. Therein, the vapor-laden inert gas stream is first compressed and then passed through a turbine expander to thereby effect an expansive cooling at pressures near atmospheric to temperatures generally well below the boiling points of the solvents to be recovered. Separation of the condensable solvent vapors from the relatively non-condensable inert gas stream carrier may then be effected with the recycling of recovered solvent back to the process and the recycling of inert gas back to the packed bed to continue its regeneration.

As mentioned, this method advantageously operates more energy efficiently than methods previously known. By using a turbine expander coupled to a compressor to effect the expansive cooling of the solvent-containing inert gas stream effluent from the packed carbon bed regeneration, the energy liberated from the cooling of the gas stream in the expander can be used to drive the compressor. The compressor effects in the gas stream a pressurization that results in a better solvent condensation for a given operating temperature. In addition, an energy exchange can be effected between the hot solvent-containing inert gas stream effluent from the bed and the cooled inert gas stream recycled from the condensation separation to pre-heat the inert gas entering the compressor and to pre-cool the solvent-containing inert gas entering the turbine. The net effect of the foregoing is a method which enables solvent-intensive industries to comply with governmental regulations while maintaining economically profitable operations.

Attendant with industrial acceptance of the aforementioned method for VOC recovery have come demands for its further refinement. Namely, because the compressor side of the turbine compressor-expander is employed to pressurize the solvent-laden inert gas effluent from the bed, the hat of compression thereby imparted to the stream must be extracted therefrom prior to its expansive cooling in the expander side in order that a sufficiently low refrigeration temperature may be achieved. Although some of this waste heat may be recovered and used to heat the inert gas stream being recycled back to the bed to continue regeneration, this recovery necessitates the introduction of an additional heat exchanger into the process. Also, because the compressed solvent-laden stream is at a relatively high pressure as compared to the expansively cooled inert gas recycle stream, the Pressure differential therebetween presents problems in heat exchanger design, construction and operation. In addition, because the inert gas recycle stream may be heated insufficiently to effect solvent vaporization within the bed solely by this heat exchange or by a subsequent heat exchange with the solvent-laden inert gas effluent from the bed, a heater must often be employed to supply the additional energy needed. Inasmuch as the capital expense associated the purchase of heat exchangers, heaters and the like, especially in light of attendant operational, energy, and maintenance expenses, is often seen as an obstacle to the adoption of this process by an industry so considering, there remains a need for further improvements in the methods for recovering VOCs from process gas streams.

Moreover, where the process gas stream carrier is both humid and contaminated with solvent vapors, solvent recovery is further complicated as water is generally co-adsorbed with solvent by packed carbon beds. The adsorbent bed generally is operated until the solvent concentration in its outlet gas stream effluent reaches a detectable preset breakthrough level. Then, process gas flow to the adsorbent bed is stopped and the adsorbent in the bed may be regenerated. Conventional regenerative processes have employed the introduction of steam into the bed to displace the adsorbed solvent and produce a solvent/water vapor effluent.

The more recent technology for regenerating and recovering solvent from adsorbent beds uses inert gases or air instead of steam to displace the adsorbed solvent from the bed. These processes generally require lower temperatures for high efficiency condensation of solvent from the gas used to regenerate the adsorbent beds. Consequently, as described in US-A- 4,480,393, to avoid ice formation in process equipment, various water selective dryers are employed for drying the vapor-laden gas stream effluent from adsorbent beds undergoing regeneration. The use of such dryers, however, increases capital expenses, the time required for completion of adsorbent bed regeneration, and presents an environmental hazard in that the regeneration of the dryer itself can result in solvent releases. For continuous process where two adsorbent beds are employed such that one bed may adsorb while the other is regenerated, any increase in time required for bed regeneration requires the adsorbing bed to be sufficiently sized to ensure efficient adsorption during the entire regeneration cycle of the other bed. This results in a vicious cycle whereby unless the adsorbent beds are continualiy increased in size to compensate for increases in regeneration time, the absorbent capacity of the absorbing bed will be exceeded before the other bed has been regenerated. As it is unrealistic to continually increase bed size, it may be seen that there exists a need for a improved method for regenerating adsorbent beds where recovery of the solvent from the regenerative gas must be effected at temperatures below the freezing point of water.

Other problems attend where the process gas stream contains a high concentration of VOCs. Such may be the case, for example, for process gas streams derived from the displacement of solvent vapor, water vapor and air from vessels such as gasoline storage tanks and the like being filled with liquid hydrocarbons. Where the solvent in the process gas stream is already concentrated, *i.e*., above 10% by volume, further concentration in adsorbent beds is not required. However, owing to the large volume of VOCs that must be recovered, the standard recovery cycle as described in US-A- 4,480,393 may be unable to handle the high condensing loads required. Thus there also remains a need for improvements in the methods for recovering VOCs when carried at high concentrations by process gas streams.

The present invention relates to a process for recovering a condensable organic compound from an inert gas stream laden therewith which overcomes energy ad equipment inefficiencies heretofore present in the art. This has been accomplished in the instant invention by using the compressor side of the turbine compressor-expander to compressively heat the inert gas recycle stream prior to its, for example, reintroduction back into an adsorbent bed being regenerated. In contrast to using the compressor side of the turbine expander to pressurize the solvent-laden inert gas stream prior to its expansive cooling in the expander side, employing the turbine expander in the manner disclosed in the present invention eliminates both the need for cooling of the stream between the expander and the compressor and the attendant need for a heat exchanger. Moreover, since compressing the inert gas recycle stream advantageously imparts thereto energy that may be used directly to effect solvent vaporization inside the bed, the need and expense of extraneously supplied heat can likewise be eliminated. Also advantageous in the instant invention is that the motive force to transport the solvent-laden inert gas from the adsorbent bed to the expander may be located downstream of the expander by the employment of a vacuum pump. Locating the main driving component after the condensables, such as solvents and water, have been separated from the inert gas carrier means that less corrosion protection therefor is required and that less expensive materials of construction may be used. The compressor, which both compressively heats the inert gas recycle stream and provides the motive force to fill the bed therewith, may also, in the instant invention, be positioned after the condensables have been removed and may likewise be constructed of less expensive materials. Thus, when employed in the inert gas regeneration of packed adsorbent beds used to strip solvent vapors from process gas streams, the present invention advantageously decreases capital expenses and simplifies operations by eliminating process equipment, saves energy by efficiently utilizing directly the heat of compression generated by the compressor, and reduces equipment purchase and maintenance costs because the main drive components for the process are located after the corrosive condensables have been removed from the inert gas stream

It is, therefore, a feature of the invention to provide a process for the economical and efficient recovery of condensable organic compounds from inert gas streams laden therewith. In its preferred embodiment as incorporated into the inert gas regeneration of solvent-saturated adsorbent beds, the process includes passing an inert gas stream laden with a condensable organic compound into heat exchange relationship with a cooler inert gas stream recovered from a later step of the process. The condensable solvent component of the heat exchanged stream is separated from the relatively noncondensable inert gas component, and the separated gas stream is passed by the motive force supplied by a vacuum pump positioned downstream through an expander for further cooling. Additional solvent then may be separated from the expanded stream, resulting in the formation of a regenerated inert gas stream. The regenerated gas stream, as aforementioned, is passed into heat exchange relationship with the warmer solvent-laden inert gas stream. The heated inert gas stream is passed into the vacuum pump and then into a compressor in order to effect its further heating through compression and the imparting of an additional motive force thereto. The compressor, advantageously, may be driven by the energy liberated by the expansive cooling of the solvent-laden inert gas stream. Finally, the heated inert gas stream then may be passed into contact with a condensable organic compound in, for example, an adsorbent bed saturated with solvent, thus forming the solvent-laden inert gas stream and enabling the repetition of the cycle.

It is a further feature of the invention to provided for an improved process for regenerating adsorbent beds containing solvent and co-adsorbed water where, for example, regeneration is effected using inert gas or air, thereby dictating that the efficient recovery of solvent therefrom be effected at temperatures below the freezing point of water. The improvement in such process comprises the steps of passing the humid contaminant-laden gas through a first adsorber until the organic contaminant is detected at a preset "breakthrough" level in the outlet gas. The outlet gas from the first adsorber is then passed through a second adsorber until the level of organic contaminant is determined to be at approximately the level of organic contaminant in the humid contaminant-laden gas being passed into the first adsorber, and at which point part of the less well-adsorbed water has passed into the outlet gas of the first adsorber. At such time, passage of the humid contaminant-laden gas into the first adsorber is discontinued and, instead, the humid contaminant-laden gas is passed into the second adsorber. During passage of the humid contaminant-laden gas into the second adsorber, the first adsorber, now loaded only with organic contaminant is regenerated. The humid contaminant-laden gas is passed into the second adsorber until the contaminant in the outlet gas from the second adsorber reaches the breakthrough level, at which time the process may be continued by passing the outlet gas from the second bed into the regenerated first bed. By operating the adsorption process in the first bed until the adsorbent is nearly saturated with the organic contaminant, the bed is advantageously and effectively stripped of water through adsorption of solvent. The stripped water is eventually released into the exhaust and thereby eliminated from the process. Thus, the dried bed may be regenerated with inert gas, air or the like without fear that recovery of solvent from the regenerative gas at temperatures below the freezing point of water will result in the frosting of process equipment.

It is still a further feature of the invention to provide for the recovery of condensable organic compounds that are highly concentrated in process streams. This has been accomplished in the present invention by the elimination of adsorbent beds and the passage of the process gas stream directly into the compressor side of a turbine compressor-expander. Alternatively, the process gas stream may be passed through an additional compressor for increased pressurization and then through a separator to recover any condensate prior to passage of the stream into the compressor side of the turbine expander. Pressurization of the process gas stream prior to its introduction into the expander side of the turbine compressor-expander results in a higher pressure drop across the expander and increased cooling of the effluent, thereby enabling the expander to handle increased condensing loads. Upon expansive cooling, any remaining organic contaminant may be separated and recovered from the process stream, with the noncondensed balance of stream, now essentially hydrocarbon-free, vented to the atmosphere or returned to the inlet of the process such that a constant volumetric throughput may be maintained. Additionally, the noncondensed balance of the expanded gas stream from the expander may be passed in heat exchange relationship with the warmer, pressurized effluent from the compressor side of the turbine compressor-expander. This heat exchange step advantageously warms the hydrocarbon-free process gas stream prior to possible recycle to prevent frosting of process equipment and advantageously cools the hydrocarbon-laden gas stream prior to its passage into the expander for expansive cooling and condensation of the hydrocarbon contaminant. In this way, energy may be conserved.

In order that the invention may be fully understood, reference is made on the accompanying drawings, wherein:
Fig. 1 is a schematic diagram of a specific configuration of the cycle for the recovery of a condensable organic compound from an inert gas stream laden therewith according to the instant invention and in connection with its application in a process for the inert gas regeneration of a packed absorbent bed used to strip solvent vapors from a process gas stream;
Fig. 2 is a graphical depiction of the thermohydraulics of the instant invention as shown by a representative plotting of system temperature versus system pressure.
Fig. 3 is a schematic diagram of a specific configuration of the cycle for recovery of a condensable organic compound that is highly concentrated in a process stream.
Fig. 4 is a diagrammatic representation of the condensable organic solvent and water contents of the adsorbent where the bed length and flow duration is plotted against the condensable organic contaminant and water concentrations during the early stage of the adsorption process;
Fig. 5 is a diagrammatic representation like Fig. 4 at the time that breakthrough of solvent in the outlet gas stream is detected; and
Fig. 6 is a diagrammatic representation like Figs. 4 and 5 at the time that the bed is withdrawn from service for regeneration.

In the following description, the instant invention initially is described as a general method for separating and recovering a condensable organic compound from its inert gas carrier stream.(*e.g*. nitrogen) Then, the invention is described as incorporated into a process for the inert gas regeneration of a packed adsorbent bed used to strip solvent vapors from a process gas stream.

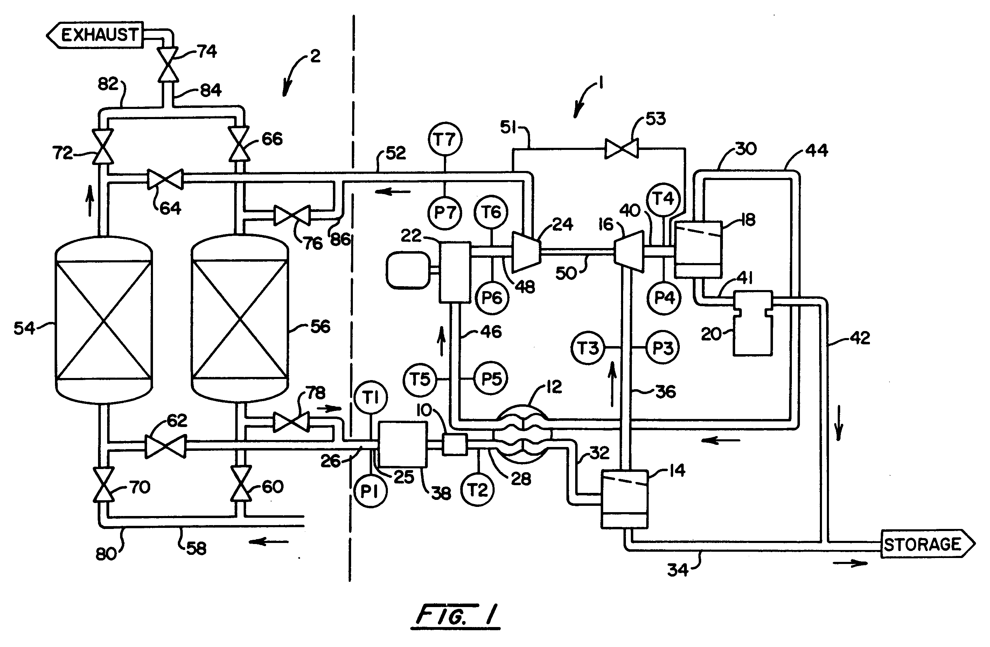

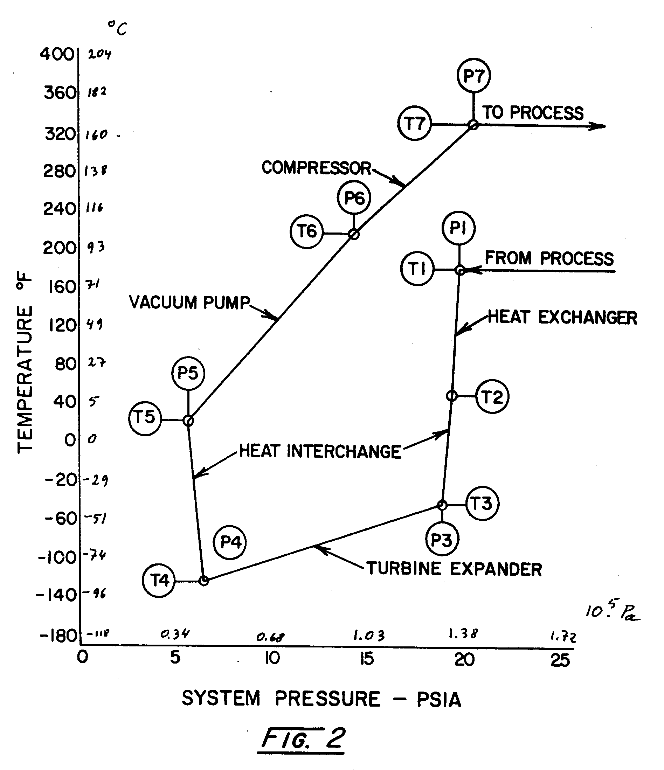

Referring initially to Fig. 1, the inventive process is represented generally at 1 and the stripping process is represented generally at 2. The inventive process includes cooler 10, heat exchanger 12, first separator 14, turbine expander 16, second separator 18, pump 20, vacuum pump 22, and compressor 24. Referring also to Fig 2, in practice an inert gas stream contaminated with a condensable organic compound (*e.g*. VOC), stream 25, enters the process via line 26, at temperature T1 and pressure P1. Depending upon whether moisture is present in the stream, contaminated stream 25 may be passed through dehumidifier 38. Similarly, depending upon temperature T1 and the characteristics of the vapor component, contaminated stream 25 may be pre-cooled in cooler 10 to temperature T2 prior to its passage into heat exchanger 12 via line 28. Advantageously, contaminated stream 25 may be cooled in heat exchanger 12 to temperature T3 by its passage in heat exchange relationship with inert gas recycle stream 30 Stream 30 has been expansively cooled to temperature T4 in turbine expander 16, as described in more detail below. Withdrawn from heat exchanger 12 via line 32, stream 25, now cooled to below the vaporization or boiling point of the organic compound being carried thereby, then enters separator 14 wherein, depending upon the temperature and pressure of stream 25 and upon the characteristics of the vapor component including its boiling point and vapor pressure, a certain portion of the organic compound is separated from the inert gas carrier, *e.g*. through condensation, and withdrawn via line 34 for storage or recycle.

The noncondensed balance of stream 25, including the inert gas carrier and the remainder of the organic compound, is withdrawn from separator 14 via line 36 at temperature T3 and pressure P3 and passed into expander 16, which advantageously is a turbine expander. Therein, stream 25 is expansively cooled from temperature T3 to temperature T4 upon a pressure drop from pressure P3 to pressure P4. The refrigeration of stream 25 effectuated by turbine expander 16 facilitates a more complete separation of the organic compound from its relatively noncondensable inert carrier gas upon entry of stream 25 into separator 18 via line 40. Inclusion of dehumidifier 38 in the process will ensure that any moisture present in stream 25 will not frost the equipment since operating temperatures within turbine 16 and separator 18 may be below the freezing point of water. Condensate is removed from separator 18 via line 41 and transported*, e.g*. by pump 20, to storage or recycle via lines 42 and 34. Advantageously, regenerated inert gas stream 30 is removed from separator 18 via line 44 and recycled back to the process from which it exited laden with an organic compound.

As previously mentioned, inasmuch as stream 25 advantageously is pre-cooled before its passage into turbine expander 16 and stream 30 is pre-heated before its introduction back into the process, an advantageous heat exchange therebetween may be effected in heat exchanger 12. Thus, stream 30 is passed into heat exchanger 12 via line 44. Withdrawn from heat exchanger 12 via line 46 at increased temperature T5 and at pressure P5, stream 30 is passed into vacuum pump 22, effecting a pressure and temperature rise to pressure P6 and temperature T6. Vacuum pump 22 is the main driving component for the process in that it supplies the motive force to "pull" solvent-laden inert gas stream 25 through turbine expander 16. Depending on process requirements, stream 30 exiting vacuum pump 22 may optionally be passed into compressor 24 via line 48 in order to effect a compressive heating from temperature T6 to temperature T7 as a consequence of pressurization from P6 to P7. Compressor 24 also imparts additional motive force to stream 30. Advantageously, compressor 24 may be coupled to turbine expander 16 through common spindle 50. When compressor 24 and expander 16 are so-coupled, the energy liberated by the expansive cooling of stream 25 is used to power the compressive heating of stream 30. Alternatively, compressor 24 may be removed and part of the energy needed to drive the vacuum pump supplied by turbine expander 16. From compressor 24 is withdrawn via line 52 regenerated and preheated inert gas stream 30, in condition for introduction back into its source process.

Additionally, there may be provided a hot bypass feature whereby a portion of regenerated and pre-heated inert gas stream 30 is withdrawn from line 52 via line 51 upon the opening of valve 53. The withdrawn portion of stream 30 is added to stream 25 for passage into separator 18 via line 40. By adding a portion of stream 30 at temperature T7 to stream 25, temperature T4 may be controlled in order to prevent freezing of the solvent or water vapor entrained in stream 25. Moreover, the bypass feature also reduces the flow through expander 16. This, in turn, reduces the efficiency of expander 16 which also raises temperature T4 of stream 25 prior to its passage into separator 18.

Looking again to Fig. 1 and Fig. 2, the description of the instant invention continues by specific reference to a process for the inert gas regeneration of a packed adsorbent bed used to strip solvent vapors (*e.g*. VOCs) from process gas streams. The stripping process represented generally at 2 typically includes at least a pair of adsorbent beds, bed 54 and bed 56, to adsorb vaporous organic compounds from process gas carrier stream 58. Such a stream may, for example, be the exhaust from an oven in which the drying of coated products liberates solvent vapors. At least two beds are needed in order to make the stripping process continuous because, as one of the adsorbent beds periodically becomes saturated with solvent, it must be taken off-line and regenerated by desorption of the solvent entrained therein. While one bed is being regenerated, the process stream to be stripped of solvent vapors then may be directed through the second bed. Regeneration of saturated beds can be economically achieved by circulation of a heated inert gas stream therethrough to effect vaporization of adsorbed solvent and transportation of the solvent vaporized to a recovery system. An inert gas desorbent is preferred over steam inasmuch as water soluble solvents can be desorbed without an attendant need for subsequent distillations to effect recovery of the solvent from the desorbent. Moreover, the presence of concentrated solvent vapors in the adsorbent bed presents a combustion danger which can be minimized by a blanketing of inert gas.

For the illustrative purpose of this description, valves 60, 62, 64, and 66 are maintained closed while valves 70, 72, 74, and 76 are maintained opened. Process gas stream 58, laden with solvent vapors, is passed via line 80 into adsorbent bed 54. Therein, solvent is adsorbed from the process stream onto a packed adsorbent media, such as activated carbon or the like. Solvent, thusly, is accumulated in bed 54 and solvent vapor-free gas may be exhausted from bed 54 via lines 82 and 84. Turning now to consideration of bed 56 undergoing regeneration, inert gas stream 30, recycled from the solvent recovery process shown generally at 1 and described previously, is introduced into bed 56 via lines 52 and 86 at temperature T7 and pressure P7. In bed 56, the energy carried by stream 30 in the from of heat effects a vaporization of adsorbed solvent, enabling withdrawal by vacuum pump 22 via lines 78 and 26 of adsorbed solvent vapor-laden stream 25 at temperature T1 and pressure P1 and a repetition of the instant inventive process represented in Fig. 1.

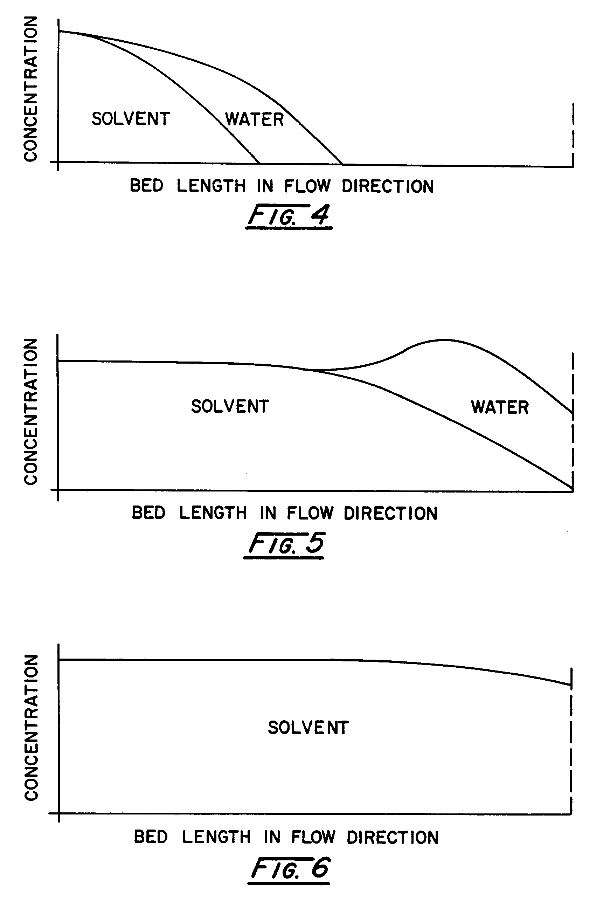

Where the VOC concentration in process gas stream 58 is high, *e.g*., above 10% by volume, further concentration of VOCs in adsorbent beds 54 and 56 is unnecessary. Consequently, beds 54 and 56 may be eliminated, and the invention may be practiced as shown in Fig. 4. Looking to Fig. 4, the invention as may be practiced with process gas streams having high VOC concentrations is shown generally at 100. Process gas stream 102, laden with a high concentration of VOC vapor as well as, for example, water vapor, is passed via line 104 into compressor 106 which may be of a water screw injector type. Process gas stream 102 may be, for example, the solvent vapor, water vapor, and air displaced from a vessel during its filling with a liquid hydrocarbon (*e.g*., gasoline). Compressor 106 effects in process gas stream 102 a pressure increase necessary for subsequent expansion of the stream by turbine expander 108. From compressor 106, compressed process gas stream 102 is passed via line 110 into separator 112. Separator 112 separates any liquid condensate, 114, from stream 102. As liquid condensate 114 may contain some VOCs, it is sent via line 116 to decanter 118 where the water and immiscible liquid VOCs separate. The noncondensed balance of stream 102 exits separator 112 via line 120 and is passed into heat exchanger 122 which may use, for example, ethylene glycol as a heat transfer medium. In heat exchanger 122, the temperature of stream 102 may be reduced to just above its freezing point. Cooled stream 102 is withdrawn from heat exchanger 122 via line 124 and is passed into separator 126 which separates additional liquid condensate 128 from stream 102. Liquid condensate 128, containing both water and immiscible VOCs, is sent via line 130 to decanter 118 for separation. Liquid hydrocarbon phase 132 is recovered from decanter 118 and is sent to product storage 134 via line 136. Aqueous phase 138 is removed from decanter 118 and may be passed to compressor 106 via lines 140 and 142. Prior to its passage to compressor 106, the temperature of aqueous phase 138 may be controlled by passage through heat exchanger 144.

The noncondensed balance of stream 102 is withdrawn from separator 126 via line 146 for pressurization in compressor 148. Pressurized stream 102 exits compressor 148 via line 150 and is passed into dryer 152 which removes any remaining water. Dryer 152 may be regenerated by air purging. As the air used to purge dryer 152 may contain traces of VOCs, it is recycled through the instant process via lines 154 to minimize uncontrolled VOC releases. Dried stream 102 is withdrawn from dryer 152 and is passed via line 156 into heat exchanger 158 to remove the heat of compression imparted to stream 102 by compressor 148 and to effect further VOC condensation. Accordingly, cooled stream 102 is passed from heat exchanger 158 to separator 160 via line 162. Liquid hydrocarbon condensate 164 is recovered from separator 160 and is sent to product storage 134 via lines 166 and 136. From separator 160, the noncondensed balance of stream 102 is passed via line 168 into heat exchanger 170 for further cooling. Advantageously, the cooling of stream 120 in heat exchanger 170 may be effected by its passage in heat exchange relationship with the chilled effluent from turbine expander 108.

Cooled stream 102 is passed form heat exchanger 170 to separator 172 via line 174. Additional liquid hydrocarbon condensate 176 is recovered from separator 172 and is passed to product storage 134 via line 178. The remaining noncondensed balance of stream 120 is removed from separator 172 via line 180 and is passed into turbine expander 108. In turbine expander 108, stream 102 is cooled sufficiently to effect condensation of any remaining entrained hydrocarbons. Advantageously, turbine expander 108 may be coupled to compressor 148 through common spindle 181. When compressor 148 and expander 108 are so coupled, the energy liberated by the expansive cooling of stream 120 in expander 108 may be used to drive compressor 148. Synergistically, the work done by expanding stream 120 on compressor 148 results in the liberation of more energy form expanding stream 120 and a correspondingly greater temperature drop.

Cooled stream 120 is withdrawn from expander 108 via line 182 and is passed into separator 184 where condensed hydrocarbons 186 are separated from stream 120 and sent to product storage via lines 188 and 136. The noncondensed balance of stream 120, now essentially hydrocarbon free, is passed via line 188 into heat exchanger 170 where an advantageous heat exchange is effected with warmer effluent 168 from separator 160. Upon withdrawal from heat exchanger 170 via line 190, the temperature of essentially hydrocarbon-free stream 102 may be raised further in heat exchanger 192 to avoid frosting of process equipment upon its recycle back to the process via lines 194 and 104. In addition, bypass lines 196 and 198 connected by by-pass valve 200 may be provided to allow for an essentially constant throughput. Actuation of bypass valve 200 may be effected automatically using the inlet pressure in line 104.

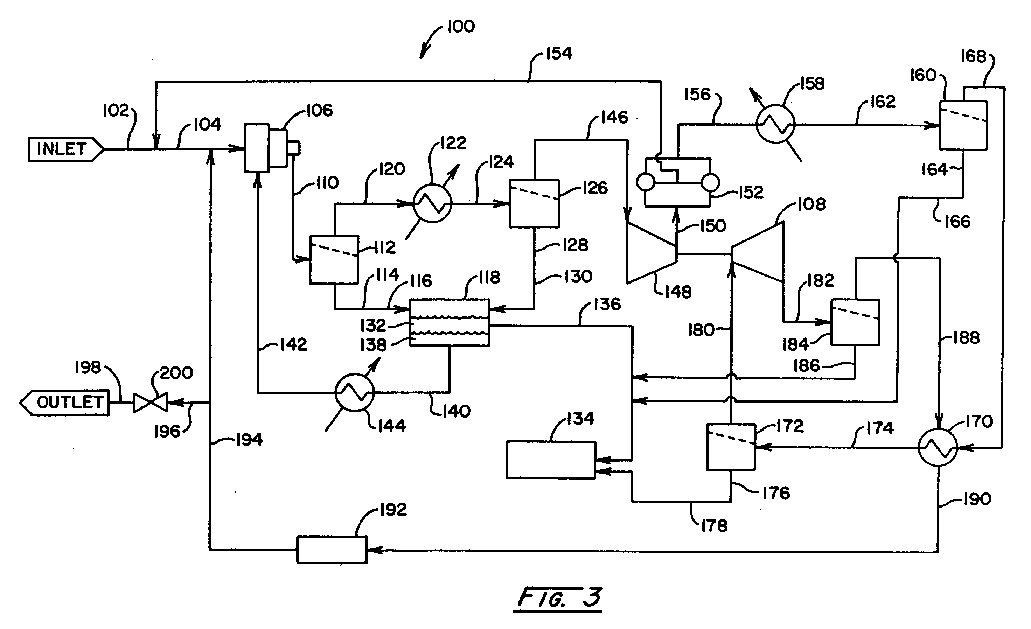

While the present invention has been specifically illustrated by reference to Figs. 1, 2 and 3, instrumentation, controls, feeders, fittings, pumps, and valves necessary for operation are not all shown, but are to be provided where necessary or desirable in conventional fashion. Materials of construction for this process are conventional for this type of operation. Thus, equipment can be composed of or lined with corrosion-resistant materials, alloys or refractory material, depending upon the specific VOC being handled. Piping, duct work and the like will be of similar material and insulated where appropriate. Various of the equipment and lines illustrated can be multiple, series, cascade, or parallel connected for additional treating time capacity, or refinements of separation and/or purification. Regeneration of the adsorbent, for example, is accomplished in conventional fashion.

Alternatively, regeneration of the adsorbent may be accomplished using series adsorption. For a two adsorbent system, initial adsorption by the first bed housed in the first adsorber is conducted in conventional fashion with both condensable organic contaminant, *e.g*. solvent, and water being adsorbed in the bed, such as illustrated at Fig. 4. Adsorption in the first bed is continued until breakthrough of contaminant at a predetermined level occurs, such as illustrated at Fig. 5. The predetermined level can be the first detectable presence of the solvent or a higher level, depending upon the level at which the contaminant can bed present in the outlet gas withdrawn from the first adsorber. At this time, part of the water is released to the exhaust.

At contaminant breakthrough, the gas withdrawn from the first bed, containing part of the water and contaminant, then is passed into a second absorber housing a second bed of particulate adsorbent. This series adsorber scheme ensures that the gas withdrawn from the second bed will be free of organic contaminant.

The series adsorber scheme is continued until the organic contaminant concentration in the gas withdrawn from the first adsorber is determined to be near the inlet concentration of the organic contaminant, as illustrated at Fig. 6. It will be observed that the water content in the first bed has been displaced by the organic contaminant adsorbed by the particulate adsorbent since conventional adsorbents (*e.g*. activated carbon and the like) prefer organic material to water. When the condition depicted at Fig. 6 has been reached, the contaminated gas no longer is passed into the first bed, but is entirely diverted for passing into the second bed which is in a condition as depicted at Fig. 4.

The first bed now can be subjected to regeneration utilizing, for example, an inert gas or air from which solvent may be recovered using the energy and equipment efficient process described hereinbefore in connection with Figs. 1 and 2. Alternatively, conventional recovery schemes may be employed as set forth in US-A-4,295,282, 4,488,393, and 4,539,816, the disclosures of which are expressly incorporated herein by reference. The utilization of the series adsorber scheme described herein means that the inert gas or air employed to effect bed regeneration can be subjected to temperatures well below the freezing point of water for efficient condensation of the organic contaminant therefrom without the potential frosting of process equipment.

Organic contaminant stripping of the gas stream by the second adsorber is continued until its condition is represented by Fig. 5. At this point, the outlet gas stream from the second adsorber bed then is passed into the regenerated first adsorbent bed or a third adsorber, depending upon bed size, gas flow, organic contaminant level, and other factors well known to those skilled in this art. The process then continues for the second adsorber until its condition is as represented at Fig. 6 whereupon all of the contaminated gas stream is diverted to the first adsorber. Thus, only one adsorber is used part of the time and both adsorbers are used in series part of the time in order to cleanse a contaminated gas stream laden with condensable organic contaminant. It will be appreciated that each "adsorber" described above could be more than one adsorber, *e.g*. parallelly or series connected, for additional treating capacity and/or time.

## Claims

1. A cyclic process for recovering a condensable organic compound from an inert gas stream laden therewith, which comprises the steps of:
(a) passing said inert gas laden stream in heat exchange relationship with a regenerated gas stream from a later step of the process;
(b) separating solvent from the heat exchanged gas laden stream of step (a);
(c) passing the separated gas stream from step (b) through an expander to further cool said separated gas stream;
(d) separating additional solvent from the expanded stream of step (c) and forming a regenerated gas stream;
(e) passing said regenerated gas stream to step (a) of the process;
(f) passing the heat exchanged regenerated gas stream from step (a) of the process through a vacuum pump;
(g) passing the regenerated gas stream of step (f) through a compressor for its heating; and
(h) passing the compressed regenerated gas stream of step (g) into contact with a condensable organic compound for forming said inert gas laden stream passed into step (a) of the process.

2. The process of claim 1 wherein step (h) comprises passing said gas stream of step (g) into contact with a solid adsorbent containing adsorbed condensable organic compound for forming said inert gas laden stream passed into step (a) of the process.

3. The process of claim 1 wherein said inert gas comprises nitrogen.

4. The process of claim 1 wherein a portion of said gas stream passed through said compressor is added to the expanded stream of step (c) prior to the separation of additional solvent therefrom in step (d).

5. The process of claim 1 wherein said compressor is mechanically coupled to the expander of step (c).

6. A process for recovering a condensable organic compound from a gas stream laden therewith, which comprises the steps of:
(a) passing said gas stream through a first compressor for its pressurization;
(b) separating at least a portion of said condensable organic compound form the pressurized gas stream of step (a);
(c) passing the separated gas stream from step (b) through a second compressor for its pressurization;
(d) separating at least a portion of said condensable organic compound from the pressurized gas stream of step (c);
(e) passing the separated gas stream from step (d) through an expander for its cooling; and
(f) separating additional said condensable organic compound from the expanded gas stream of step (e).

7. The process of claim 6 wherein the separated gas stream of step (f) is passed in heat exchange relationship with the separated gas stream of step (d) prior to its passage through the expander of step (e).

8. The process of claim 6 wherein at least a portion of the separated gas stream of step (f) is passed into step (a) of the process to maintain a constant throughput.

9. The process of claim 6 wherein the compressor of step (c) and the expander of step (e) are mechanically coupled.

## Patentansprüche

1. Cyclisches Verfahren zur Wiedergewinnung einer kondensierbaren organischen Verbindung aus einem damit beladenen Strom eines inerten Gases, das die folgenden Schritte umfaßt:
(a) Führen des beladenen Stroms des inerten Gases in Wärmeaustauschbeziehung mit einem regenerierten Gasstrom aus einem späteren Verfahrensschritt;
(b) Abtrennen von Lösungsmittel aus dem durch Wärmeaustausch behandelten beladenen Strom des Gases aus Schritt (a);
(c) Hindurchführen des abgetrennten Gasstromes aus Schritt (b) durch eine Entspannungseinrichtung, um den abgetrennten Gasstrom weiter zu kühlen;
(d) Abtrennen von zusätzlichem Lösungsmittel aus dem entspannten Strom aus Schritt (c) und Bilden eines regenerierten Gasstromes;
(e) Führen des regenerierten Gasstromes zu Schritt (a) des Verfahrens;
(f) Hindurchführen des durch Wärmeaustausch behandelten regenerierten Gasstromes aus Schritt (a) des Verfahrens durch eine Vakuumpumpe;
(g) Hindurchführen des regenerierten Gasstromes aus Schritt (f) durch einen Kompressor, um ihn zu erhitzen; und
(h) In Kontakt bringen des komprimierten, regenerierten Gasstromes aus Schritt (g) mit einer kondensierbaren organischen Verbindung, um den beladenen Strom des inerten Gases zu bilden, der in Schritt (a) des Verfahrens geführt worden ist.

2. Verfahren nach Anspruch 1, wobei Schritt (h) umfaßt, den Gasstrom aus Schritt (g) mit einem festen Adsorbiermittel in Kontakt zu bringen, das eine adsorbierte, kondensierbare, organische Verbindung enthält, um den in Schritt (a) des Verfahrens eingeführten beladenen Strom des inerten Gases zu bilden.

3. Verfahren nach Anspruch 1, wobei das inerte Gas Stickstoff enthält.

4. Verfahren nach Anspruch 1, wobei ein Teil des durch den Kompressor hindurchgeführten Gasstroms zu dem entspannten Strom von Schritt (c) gegeben wird, bevor zusätzliches Lösungsmittel davon in Schritt (d) abgetrennt wird.

5. Verfahren nach Anspruch 1, wobei der Kompressor mit der Entspannungseinrichtung von Schritt (c) mechanisch gekoppelt ist.

6. Verfahren zur Wiedergewinnung einer kondensierbaren organischen Verbindung aus einem damit beladenen Gasstrom, das die folgenden Schritte umfaßt:
(a) Hindurchführen des Gasstromes durch einen ersten Kompressor zur Druckbeaufschlagung;
(b) Abtrennen von mindestens einem Teil der kondensierbaren organischen Verbindung von dem unter Druck gesetzten Gasstrom aus Schritt (a);
(c) Hindurchführen des abgetrennten Gasstromes aus Schritt (b) durch einen zweiten Kompressor zur Druckbeaufschlagung;
(d) Abteilen von mindestens einem Teil der kondensierbaren organischen Verbindung von dem unter Druck gesetzten Gasstrom aus Schritt (c);
(e) Hindurchführen des abgetrennten Gasstromes aus Schritt (d) zur Abkühlung durch eine Entspannungseinrichtung; und
(f) Abtrennen von zusätzlicher kondensierbarer organischer Verbindung aus dem entspannten Gasstrom aus Schritt (e).

7. Verfahren nach Anspruch 6, wobei der abgetrennte Gasstrom aus Schritt (f) vor seinem Durchfluß durch die Entspannungseinrichtung von Schritt (e) in Wärmeaustauschbeziehung mit dem abgetrennten Gasstrom aus Schritt (d) geführt wird.

8. Verfahren nach Anspruch 6, wobei zumindest ein Teil des abgetrennten Gasstromes aus Schritt (f) in Schritt (a) des Verfahrens eingeführt wird, um einen konstanten Durchsatz aufrechtzuerhalten.

9. Verfahren nach Anspruch 6, wobei der Kompressor von Schritt (c) und die Entspannungseinrichtung aus Schritt (e) miteinander mechanisch gekoppelt sind.

## Revendications

1. Un procédé cyclique pour récupérer un composé organique condensable d'un courant de gaz inerte chargé par celui-ci qui comprend les étapes de:
(a) passer ce courant de gaz inerte chargé en un rapport d'échange thermique avec un courant de gaz régénéré provenant d'une étape ultérieure du procédé;
(b) séparer le solvant du courant de gaz chargé ayant subi l'échange thermique de l'étape (a);
(c) passer le courant de gaz séparé de l'étape (b) au travers d'un expanseur pour refroidir davantage ce courant de gaz séparé;
(d) séparer du solvant supplémentaire du courant expansé de l'étape (c) et former un courant de gaz régénéré;
(e) passer ce courant de gaz régénéré vers l'étape (a) du procédé;
(f) passer le courant de gaz régénéré ayant subi l'échange de chaleur de l'étape (a) du procédé au travers d'une pompe à vide;
(g) passer le courant de gaz régénéré de l'étape (f) au travers d'un compresseur pour le chauffer; et
(h) passer le courant de gaz régénéré comprimé de l'étape (g) en contact avec un composé organique condensable pour former ce courant chargé de gaz inerte passé dans l'étape (a) du procédé.

2. Procédé selon la revendication 1 au cours duquel l'étape (h) comprend passer le courant de gaz de l'étape (g) en contact avec un absorbant solide, contenant du composé organique condensable adsorbé pour former ce courant chargé de gaz inerte passant au travers de l'étape (a) du procédé.

3. Procédé selon la revendication 1 dans lequel le gaz inerte comprend de l'azote.

4. Procédé selon la revendication 1 dans lequel une partie de ce courant de gaz passé au travers du compresseur est ajoutée au courant expansé de l'étape (c) avant la séparation de solvant supplémentaire de celui-ci dans l'étape (d).

5. Procédé selon la revendication 1 dans lequel ce compresseur est couplé mécaniquement à l'expanseur de l'étape (c).

6. Un procédé pour récupérer un composé organique condensable provenant d'un courant de gaz chargé de celui-ci, qui comprend les étapes de:
(a) passer ce courant de gaz au travers d'un premier compresseur pour sa pressurisation.
(b) séparer au moins une partie de ce composé organique condensable de ce courant de gaz pressurisé de l'étape (a);
(c) passer le courant de gaz séparé depuis l'étape (b) au travers d'un second compresseur pour sa pressurisation.
(d) séparer au moins une partie de ce composé organique condensable du courant de gaz pressurisé de l'étape (c);
(e) passer ce courant de gaz séparé de l'étape (d) au travers d'un expanseur pour son refroidissement; et
(f) séparer une nouvelle fois le composé organique condensable du courant de gaz expansé de l'étape (e).

7. Procédé selon la revendication 6 dans lequel le courant de gaz séparé de l'étape (f) est passé en un rapport d'échange thermique avec le courant de gaz séparé de l'étape (d) avant son passage au travers de l'expanseur de l'étape (e).

8. Procédé selon la revendication 6 dans lequel au moins une partie du courant de gaz séparé de l'étape (f) est passé dans l'étape (a) du procédé pour maintenir un débit constant.

9. Procédé selon la revendication 6 dans lequel le compresseur de l'étape (c) et l'expanseur de l'étape (e) sont mécaniquement couplés.
